# EUROPEAN PATENT SPECIFICATION

(11) **EP 4 451 445 B1**
(45) Date of publication and mention of the grant of the patent: **01.04.2026**
(21) Application number: 23773558.4
(22) Date of filing: 24.02.2023
(51) Int. Cl.: H01M 50/244, H01M 50/242, H01M 50/258, H01M 50/209, H01M 50/227, H01M 50/249

(54) **BATTERY CASE, BATTERY AND ELECTRIC APPARATUS**
BATTERIEGEHÄUSE, BATTERIE UND ELEKTRISCHE VORRICHTUNG
BOÎTIER DE BATTERIE, BATTERIE ET APPAREIL ÉLECTRIQUE

(30) Priority: 22.03.2022 CN 202220629625 U
(43) Date of publication of application: 23.10.2024
(73) Proprietor: Contemporary Amperex Technology (Hong Kong) Limited, Central, Central And Western District (HK)
(72) Inventor: LI, Zhiqiang, Ningde, Fujian 352100 (CN); ZENG, Chao, Ningde, Fujian 352100 (CN); BAO, Cong, Ningde, Fujian 352100 (CN); WANG, Shengwei, Ningde, Fujian 352100 (CN)
(74) Representative: Ziebig Hengelhaupt Intellectual Property Attorneys Patentanwaltskanzlei PartGmbB
(86) International application number: PCT/CN2023/078258
(87) International publication number: WO 2023/179307

(56) References cited:
- EP-A1- 2 332 761
- CN-A- 111 653 701
- CN-A- 111 653 701
- CN-A- 111 900 280
- CN-A- 112 582 722
- CN-A- 113 594 601
- CN-A- 113 823 870
- CN-U- 208 111 531
- CN-U- 209 071 424
- CN-U- 209 071 424
- CN-U- 213 483 866
- CN-U- 213 483 866
- CN-U- 215 451 603
- CN-U- 215 451 603
- CN-U- 217 158 464
- US-A1- 2022 006 151

## Description

### CROSS-REFERENCE TO RELATED APPLICATIONS

This application claims priority to Chinese Patent Application No. 202220629625.4, filed on March 22, 2022 and entitled "BATTERY BOX, BATTERY, AND ELECTRIC DEVICE".

### TECHNICAL FIELD

This application relates to the field of battery technologies, and in particular, to a battery box, a battery, and an electric device.

### BACKGROUND

At present, with the widespread use of batteries, the safety of batteries in use has been increasingly emphasized.

In the prior art, other structures are arranged between a bottom plate of a battery box and a battery module to protect the battery module. However, this manner increases the weight of the battery.

Therefore, it is an urgent issue to address how to provide protection for the battery without significantly increasing its weight. CN111653701A discloses an encapsulation type power battery system which comprises a tray, heat conduction structure glue, a BDU module, foaming glue, a battery core, double-component structure glue and a top cover. CN213483866U discloses a battery package and vehicle for vehicle, battery package, including a battery pack housing having a battery tray floor; a bottom plate guard plate disposed at a lower side of the battery tray bottom plate, and the bottom plate guard plate is configured as a non-metal part. CN215451603U discloses a battery pack and a vehicle. The battery pack comprises a battery tray, a battery module, a protective layer and a thermal insulation layer. CN111900280A discloses a battery box and a battery box body. US20220006151A1 discloses a high strength frame of a sealable containment system for containing and protecting energy cells or batteries. The protection provided by the high strength frame provides impalement resistance, impact resistance, fire resistance, and fluid penetration prevention.

### SUMMARY

In view of the foregoing issue, this application provides a battery box, a battery, and an electric device, where the battery box can provide protection for a battery module without increasing excessive weight. The present invention is defined by the independent claims. In the following, in case parts of the description and drawing referring to embodiments, which are not covered by the claims are not presented as embodiments of the invention, but as examples useful for understanding the invention.

To solve the foregoing technical issue, embodiments of this application provide the following technical solution.

According to a first aspect, this application provides a battery box, including:
a bottom plate and a frame, where each of two ends of the frame is provided with an opening, the opening at one end of the frame is connected to an edge of the bottom plate to form an accommodating space, and a light-weight energy absorber is arranged on a side of the bottom plate in the accommodating space facing the accommodating space.

In the technical solution of this embodiment of this application, this application provides a battery box including a bottom plate and a frame. An opening at one end of the frame is connected to an edge of the bottom plate, such that the frame and the bottom plate form an accommodating space, and a battery module can be accommodated in the accommodating space. A light-weight energy absorber is arranged on a side of the bottom plate in the accommodating space facing the accommodating space, that is, the light-weight energy absorber is arranged between the bottom plate and the battery module in the accommodating space. In this way, in a case that an impact or a collision occurs at the bottom of the battery box, the light-weight energy absorber can absorb the impact energy produced by the impact or collision, thereby greatly reducing the vibration, extrusion, and collision intensity of a battery module in the battery box, and providing buffering and protection for the battery module, and the light-weight energy absorber is light in weight, thereby providing protection for the battery module without increasing excessive weight.

In the first aspect, the battery box further includes a protection plate, where the protection plate is arranged in the accommodating space and located on the side of the bottom plate facing the accommodating space. Arrangement of the protection plate further provides protection for the battery module in the battery box, prevents the battery module from being damaged when an impact or a collision occurs in the battery box, and prolongs the service life of the battery module.

In some embodiments, the protection plate is a hollow structure. The hollow-structured protection plate uses less material and is lighter in weight, thereby providing protection for the battery module while reducing weight.

In the first aspect, the protection plate and the bottom plate are spaced apart to form a cavity. The formation of the cavity between the bottom plate and the protection plate can further absorb the impact force produced during the impact or collision, and reduce the magnitude of the impact force reaching the battery module, thereby further providing protection for the battery module. In addition, a medium can be arranged in the cavity to further absorb the impact force produced during the impact or collision, providing protection for the battery module.

In the first aspect, the light-weight energy absorber is arranged in the cavity. The medium in the cavity is served as a light-weight energy absorber, such that the light-weight energy absorber and the protection plate are better arranged for providing protection for the battery module, reducing the space occupied, and exerting the protective effect of the protection plate and the light-weight energy absorber on the battery module to the greatest extent.

In the first aspect, an injection hole communicating with the accommodating space is arranged on a side wall of the frame, where the injection hole is used for injecting a material forming the light-weight energy absorber into the accommodating space. The injection hole arranged on the frame allows for injection of the material forming the light-weight energy absorber into the battery box after the battery box is assembled, such that the light-weight energy absorber is arranged in the battery box to provide protection for the battery module.

In some embodiments, the injection hole is arranged on a side wall of the frame that corresponds to the cavity. The battery box includes a frame, a bottom plate, and a protection plate, where the frame and the bottom plate enclose an accommodating space, the protection plate is arranged in the accommodating space, and a cavity is formed between the protection plate and the bottom plate. In a case that a light-weight energy absorber is arranged in the cavity, the protection plate and the light-weight energy absorber can provide protection for the battery module to the greatest extent. During arrangement of the light-weight energy absorber, the injection hole can be arranged in an area where a side wall of the frame is opposite the cavity. This allows the light-weight energy absorber to be arranged in the cavity, implementing maximum protection for the battery module.

In some embodiments, the light-weight energy absorber includes a styrofoam material. The light-weight energy absorber including the styrofoam material has good buffering energy-absorbing effect, thereby providing better protection for the battery module, and has lower costs.

According to a second aspect, this application provides a battery, including the battery box in the foregoing embodiment.

According to a third aspect, this application provides an electric device, including the battery in the foregoing embodiment, where the battery is configured to supply electrical energy.

The foregoing description is merely an overview of the technical solution of this application. For a better understanding of the technical means in this application such that they can be implemented according to the content of the specification, and to make the above and other objectives, features and advantages of this application more obvious and easier to understand, the following describes specific embodiments of this application.

### BRIEF DESCRIPTION OF DRAWINGS

Persons of ordinary skill in the art can clearly understand various other advantages and benefits by reading the detailed description of the optional embodiments below. The accompanying drawings are merely intended to illustrate the optional embodiments and are not intended to limit this application. In addition, in all the accompanying drawings, same parts are denoted by same reference signs. In the accompanying drawings:
FIG. 1 is an exploded view of a battery box when it is inverted according to some embodiments of this application;
FIG. 2 is an exploded view of another battery box when it is inverted according to some embodiments of this application; and
FIG. 3 is an exploded view of still another battery box when it is inverted according to some embodiments of this application.

Reference signs in specific embodiments are as follows:
1: battery box; 11: bottom plate; 12: frame; 121: injection hole; 13: light-weight energy absorber; and 14: protection plate.

### DESCRIPTION OF EMBODIMENTS

The following describes in detail the embodiments of technical solutions of this application with reference to the accompanying drawings. The following embodiments are merely intended for a clearer description of the technical solutions of this application and therefore are used as just examples.

Unless otherwise defined, all technical and scientific terms used herein shall have the same meanings as commonly understood by those skilled in the art to which this application relates. The terms used herein are intended to merely describe the specific embodiments rather than to limit this application. The terms "include", "comprise", and "have" and any other variations thereof in the specification, claims and brief description of drawings of this application are intended to cover non-exclusive inclusions.

In the description of the embodiments of this application, the terms "first", "second" and the like are merely intended to distinguish between different objects, and shall not be understood as any indication or implication of relative importance or any implicit indication of the number, sequence or primary-secondary relationship of the technical features indicated. In the description of this application, "a plurality of" means at least two unless otherwise specifically stated.

In this specification, reference to "embodiment" means that specific features, structures or characteristics described with reference to the embodiment may be incorporated in at least one embodiment of this application. The word "embodiment" appearing in various places in the specification does not necessarily refer to the same embodiment or an independent or alternative embodiment that is exclusive of other embodiments. It is explicitly or implicitly understood by persons skilled in the art that the embodiments described herein may be combined with other embodiments.

In the description of the embodiments of this application, the term "and/or" is only an associative relationship for describing associated objects, indicating that three relationships may be present. For example, A and/or B may indicate the following three cases: presence of only A, presence of both A and B, and presence of only B. In addition, the character "/" in this specification generally indicates an "or" relationship between contextually associated objects.

In the description of the embodiments of this application, the term "a plurality of" means more than two (inclusive). Similarly, "a plurality of groups" means more than two (inclusive) groups, and "a plurality of pieces" means more than two (inclusive) pieces.

In the description of the embodiments of this application, the orientations or positional relationships indicated by the technical terms "center", "longitudinal", "transverse", "length", "width", "thickness", "upper", "lower", "front", "rear", "left", "right", "vertical", "horizontal", "top", "bottom", "inside", "outside", "clockwise", "counterclockwise", "axial", "radial", "circumferential", and the like are based on the orientations or positional relationships as shown in the accompanying drawings. These terms are merely for ease and brevity of description of the embodiments of this application rather than indicating or implying that the means or components mentioned must have specific orientations or must be constructed or manipulated according to specific orientations, and therefore shall not be construed as any limitations on embodiments of this application.

In the description of the embodiments of this application, unless otherwise specified and defined explicitly, the terms "mounting", "connecting", "join", and "fastening" should be understood in their general senses. For example, they may refer to a fixed connection, a detachable connection, or an integral connection, may refer to a mechanical connection or electrical connection, and may refer to a direct connection, an indirect connection via an intermediate medium, or an interaction between two elements. Persons of ordinary skill in the art can understand specific meanings of these terms in this application as appropriate to specific situations.

Currently, from a perspective of the market development, application of traction batteries is being more extensive. Traction batteries have been not only used in energy storage power supply systems such as hydroelectric power plants, thermal power plants, wind power plants, and solar power plants, but also widely used in many other fields including electric transportation tools such as electric bicycles, electric motorcycles, and electric vehicles, military equipment, and aerospace. With continuous expansion of application fields of traction batteries, market demands for the traction batteries are also expanding.

The inventors have noticed that as batteries are increasingly used in various applications, the probability of battery experiencing a collision or an impact is growing, and the protection for batteries becomes increasingly crucial to avoid damage to the batteries during the collision or impact in application.

To solve the problem of damage to the batteries during the collision or impact, the applicant has found through research that a light energy absorber can be arranged on a side of the bottom plate in the battery box facing the accommodating space to absorb an impact force during the collision or impact, so as to reduce the impact force reaching a battery module, providing buffering and protection for the battery module.

Based on the foregoing considerations, to solve the problem that a battery module is prone to damage under the collision or impact, the inventors have designed a battery box after in-depth research, in which a light energy absorber is arranged on a side of a bottom plate in the battery box facing an accommodating space of the battery box to slow down and absorb the impact force during collision or impact, thereby providing protection for the battery module.

The battery box and battery disclosed in the embodiments of this application may be used without limitation in an electric device such as a vehicle, a ship, or an aircraft. The battery box, the battery, and the like disclosed in this application may be used to constitute a power supply system of that electric device, which helps to provide protection for the battery module by the light energy absorber in the battery box in a case of collision or impact, to prevent the battery module from being damaged in a case of collision or impact, and to prolong the service life of the battery.

An embodiment of this application provides an electric device that uses a battery as a power source. The electric device may be but is not limited to a mobile phone, a tablet, a laptop computer, an electric toy, an electric tool, an electric bicycle, an electric car, a ship, or a spacecraft. The electric toy may be a fixed or mobile electric toy, for example, a game console, an electric toy car, an electric toy ship, and an electric toy airplane. The spacecraft may include an airplane, a rocket, a space shuttle, a spaceship, and the like.

For ease of description, a battery box 1 of an embodiment of this application is used as an example for description of the following embodiments.

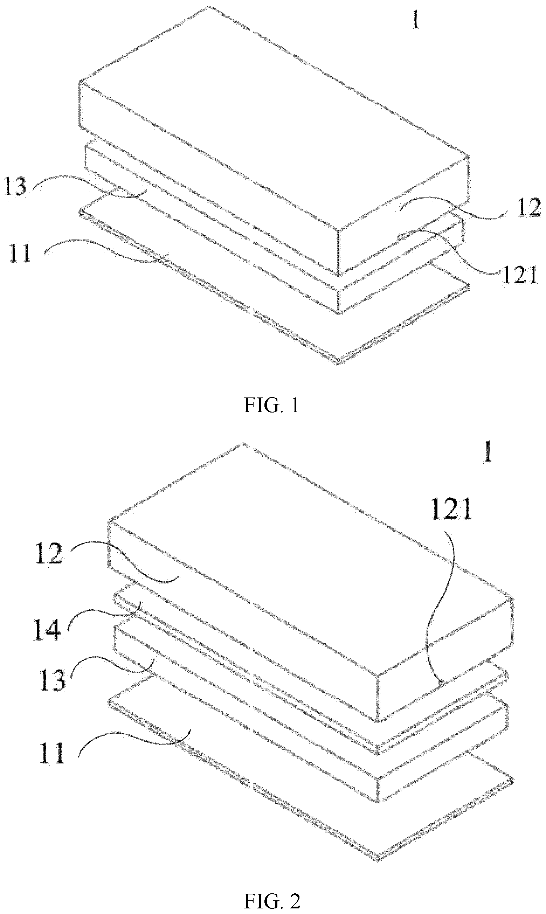

Referring to FIG. 1, FIG. 1 is an exploded view of a battery box 1 according to some embodiments of this application. The battery box 1 includes a frame 12, a bottom plate 11, and a light energy absorber 13. The frame 12 is a structure with openings at two ends, and the frame 12 and the bottom enclose an accommodating space with an opening at an end. A battery module is arranged in the accommodating space, and the light energy absorber 13 is also arranged in the accommodating space and located on a side of the bottom facing the accommodating space, which means that the light energy absorber 13 is arranged between the bottom plate 11 and the battery module. In this way, in a case of collision or impact, the light energy absorber 13 between the bottom plate 11 and the battery module can absorb an impact force for the battery module, thereby providing buffering and protection for the battery module.

The battery box 1 may further have a protection plate 14. The protection plate 14 is also arranged on the side of the bottom plate 11 facing the accommodating space, that is, the protection plate 14 is also arranged between the battery module and the bottom plate 11. In a case of collision or impact, the protection plate 14 arranged between the bottom plate 11 and the battery module can absorb the impact force for the battery module, thereby providing buffering and protection for the battery module.

A battery includes a battery box 1 and a battery module, where the battery module is accommodated in the battery box 1. The battery box 1 is configured to provide an accommodating space for the battery module, and the battery module may be of various structures. In some embodiments, the battery box 1 may include a frame 12 and a bottom plate 11. The frame 12 and the bottom plate 11 form an accommodating space with an opening at one end, the battery module is arranged in the accommodating space, and a light energy absorber 13 located between the bottom plate 11 and the battery module is further arranged in the battery box 1, such that in a case of collision or impact, the light energy absorber 13 arranged between the bottom plate 11 and the battery module can absorb an impact force for the battery module, thereby providing buffering and protecting for the battery module. In addition, the light energy absorber 13 is light in weight and can provide protection for the battery module without increasing excessive weight.

It should be noted that in this application, the battery module may be a battery module composed of battery cells, and in this case, the battery module can include an end plate and a side plate. In this application, the battery module may alternatively be a collection of multiple battery cells without any end plate or side plate.

In some embodiments of this application, the battery can be used as not only the operational power source for the electric device but also a driving power source for the electric device, replacing or partially replacing fossil fuel or natural gas to provide driving traction for the electric device.

In the battery, the battery module includes multiple battery cells, and the multiple battery cells may be connected in series, parallel, or series-parallel, where being connected in series-parallel means a combination of series and parallel connections of the multiple battery cells. The multiple battery cells may be directly connected in series, parallel, or series-parallel, and then an entirety of the battery module composed of multiple battery cells is accommodated in the battery box 1.

Each battery cell may be a secondary battery or a primary battery, a lithium-sulfur battery, a sodium-ion battery, or a magnesium-ion battery, without being limited thereto. The battery cell may be flat, cuboid, or of other shapes.

An electric device provided in some embodiments of this application includes a battery. The electric device may be a vehicle, where the vehicle may be a fossil fuel vehicle, a natural-gas vehicle, or a new energy vehicle, where the new energy vehicle may be a battery electric vehicle, a hybrid electric vehicle, a range-extended vehicle, or the like. The vehicle is provided with a battery inside, where the battery may be disposed at the bottom, front or rear of the vehicle. The battery may be configured to supply power to the vehicle. For example, the battery may be used as an operational power supply for the vehicle. The vehicle may further include a controller and a motor, where the controller is configured to control the battery to supply power to the motor, for example, to satisfy power needs of start, navigation, and driving of the vehicle.

According to some embodiments of this application, referring to FIG. 1, a battery box 1 includes a bottom plate 11 and a frame 12, where each of two ends of the frame 12 is provided with an opening, the opening at one end of the frame 12 is connected to an edge of the bottom plate 11 to form an accommodating space, and a light energy absorber 13 is arranged on a side of the bottom plate 11 in the accommodating space facing the accommodating space.

The frame 12 is a side wall of the battery box 1, and the frame 12 encloses an accommodating space with openings at the top and bottom. One end of the frame 12 is connected to the bottom plate 11, such that the frame 12 and the bottom plate 11 form an accommodating space with an opening at one end. A battery module is accommodated in the accommodating space, and the light energy absorber 13 is stacked on the bottom plate 11 of the battery box 1 and located above the battery module.

In these embodiments, the light energy absorber 13 is arranged in the accommodating space formed by the bottom plate 11 and the frame 12 in the battery box 1, and the light energy absorber 13 is arranged on a side of the bottom plate 11 facing the accommodating space, that is, the light energy absorber 13 is arranged between the bottom plate 11 and the battery module. In this way, in a case that an impact or a collision occurs at the bottom of the battery box 1, the light energy absorber 13 can absorb the impact energy produced by the impact or collision, thereby greatly reducing the vibration, extrusion, and collision intensity of a battery module in the battery box 1, and providing buffering and protection for the battery module, and the light energy absorber 13 is light in weight, thereby providing protection for the battery module without increasing excessive weight.

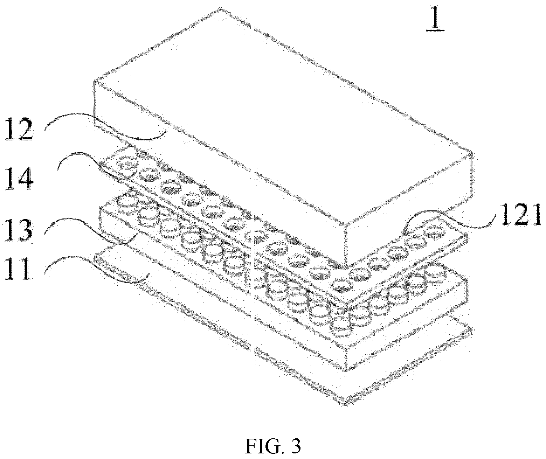

Referring to FIG. 2 and FIG. 3, according to some embodiments of this application, the battery box 1 further includes a protection plate 14, where the protection plate 14 is arranged in the accommodating space and located on the side of the bottom plate 11 facing the accommodating space.

The battery box 1 includes a frame 12, a bottom plate 11, and a protection plate 14. The frame 12 and the bottom plate 11 enclose an accommodating space with an opening at an end. The protection plate 14, a battery module, and light energy absorber 13 are arranged in the accommodating space, and the protection plate 14 is located between the battery module and the bottom plate 11. The light energy absorber 13 can be arranged between the protection plate 14 and the bottom plate 11 or between the protection plate 14 and the battery module. The protection plate 14 may be provided in one layer or multiple layers. The multiple layers of protection plates 14 may be spaced apart or stacked. The protection plate 14 may be made of a polypropylene material or a resin material.

In these embodiments, the protection plate 14 further provides protection for the battery module in the battery box 1, absorbs the impact force produced during a collision or an impact, further reduces the vibration, extrusion, and collision intensity of the battery module in the battery box 1, prevents the battery module from being damaged when an impact or a collision occurs in the battery box 1, and prolongs the service life of the battery module.

Referring to FIG. 3, according to some embodiments of this application, the protection plate 14 is a hollow structure.

The hollow-structured protection plate 14 is provided with several holes at intervals, sizes and shapes of the holes are set according to requirements, and the number of the holes is also set according to requirements. Optionally, multiple circular or polygonal holes are uniformly arranged on the protection plate 14.

In these embodiments, the hollow-structured protection plate 14 uses less material, which reduces the cost and presents a lighter weight, thereby providing protection for the battery module while reducing weight.

Referring to FIG. 2 and FIG. 3, according to some embodiments of this application, the protection plate 14 and the bottom plate 11 are spaced apart and form a cavity.

The battery box 1 includes a frame 12, a bottom plate 11, a protection plate 14, and a light energy absorber 13. The bottom plate 11 is fixedly arranged at the bottom opening of the frame 12, and then the protection plate 14 is arranged in an accommodating space formed by the bottom plate 11 and the frame 12, and is spaced apart from the bottom plate 11, with a cavity formed therebetween. The protection plate 14 is located between the bottom plate 11 and the battery module, and the periphery of the protection plate 14 is fixedly connected to an inner wall of the frame 12 to fix the protection plate 14 in the accommodating space. The light energy absorber 13 can be arranged between the protection plate 14 and the bottom plate 11 or between the protection plate 14 and the battery module.

In these embodiments, the cavity formed between the bottom plate 11 and the protection plate 14 can further absorb the impact force produced during the impact or collision, and reduce the magnitude of the impact force reaching the battery module, thereby further providing protection for the battery module. In addition, a medium can be arranged in the cavity to further absorb the impact force produced during the impact or collision, providing protection for the battery module.

Referring to FIG. 2 and FIG. 3, according to some embodiments of this application, a light energy absorber 13 is disposed in a cavity.

The battery box 1 includes a frame 12, a bottom plate 11, a protection plate 14, and a light energy absorber 13. The bottom plate 11 is fixedly arranged at the bottom opening of the frame 12, and then the protection plate 14 is arranged in an accommodating space formed by the bottom plate 11 and the frame 12. The periphery of the protection plate 14 is fixedly connected to an inner wall of the frame 12, and spaced apart from the bottom plate 11, with a cavity formed therebetween. The protection plate 14 is located between the bottom plate 11 and the battery module. The light energy absorber 13 is provided between the protection plate 14 and the bottom plate 11.

In these embodiments, the light energy absorber 13 is arranged in the cavity formed between the protection plate 14 and the bottom plate 11, to be specific, the multi-layer energy-absorbing arrangement of the protection plate 14 and the light energy absorber 13 can further improve the anti-collision effect. In this way, in a case that an external collision occurs at the bottom of the battery box 1, a light energy-absorbing layer with large elastic deformation first absorbs the energy, and then the protection plate 14 absorbs the extra energy, which further improves the protection of the battery pack, better arranges the light energy absorber 13 and protection plate 14 that protect the battery module, reduces space occupied, and can maximize the protective effect of the protection plate 14 and the light energy absorber 13 on the battery module.

Referring to FIG. 1 to FIG. 3, according to some embodiments of this application, an injection hole 121 communicating with the accommodating space is arranged on a side wall of the frame 12, where the injection hole 121 is used for injecting a material forming the light energy absorber 13 into the accommodating space.

The injection hole 121 is a through hole arranged on any side wall of the frame 12, and the injection hole 121 may be provided in one or more.

In these embodiments, the arrangement of the injection hole 121 on the frame 12 allows for injection of the material forming the light energy absorber 13 into the battery box 1 after the battery box 1 is assembled, such that the light energy absorber 13 is arranged in the battery box 1 to provide protection for the battery module. In a case that the injection hole 121 is provided in plural, rapid injection of the light energy absorber 13 can be realized.

Referring to FIG. 1 to FIG. 3, according to some embodiments of this application, the injection hole 121 is arranged on a side wall of the frame 12 that corresponds to the cavity.

The battery box 1 includes a frame 12, a bottom plate 11, and a protection plate 14, where the frame 12 and the bottom plate 11 enclose an accommodating space, the protection plate 14 is arranged in the accommodating space, and a cavity is formed between the protection plate 14 and the bottom plate 11. In a case that a light energy absorber 13 is arranged in the cavity, the protection plate 14 and the light energy absorber 13 can provide protection for the battery module to the greatest extent. During arrangement of the light energy absorber 13, an injection hole 121 can be arranged in an area where a side wall of the frame 12 is opposite the cavity. This allows the light energy absorber 13 to be arranged in the cavity, implementing maximum protection for the battery module.

In these embodiments, the injection hole 121 is correspondingly arranged in a position where the frame 12 corresponds to the cavity, so as to inject the materials forming the light energy absorber 13 into the cavity. Similarly, the injection hole 121 can be provided in one or more, and the arrangement of multiple injection holes 121 can realize the rapid injection of the material of the light energy absorber 13.

According to some embodiments of this application, the light energy absorber 13 includes a styrofoam material.

The light energy absorber 13 may be made of a styrofoam material or other materials such as rubber, resin, or foam, provided that the material is suitable for production and application.

In these embodiments, the light energy absorber 13 includes a styrofoam material. The styrofoam material has a good buffering and energy-absorbing effect, thereby providing better protection for the battery module, and the cost of styrofoam material is lower, thereby reducing the cost of the light energy absorber 13.

According to some embodiments of this application, this application further provides a battery including the battery box 1 described in any one of the foregoing solutions.

According to some embodiments of this application, this application further provides an electric device including the battery in any one of the foregoing solutions. The battery is configured to supply electric energy to the electric device.

The electric device may be any one of the foregoing devices or systems that use the battery.

This application provides a battery box 1, where the battery box 1 includes a frame 12, a bottom plate 11, and a protection plate 14. The frame 12 and the bottom plate 11 enclose an accommodating space, both a battery module and the protection plate 14 are arranged in the accommodating space, and the protection plate 14 is located between the battery module and the bottom plate 11. The protection plate 14 and the bottom plate 11 are spaced apart to form a cavity, and a light energy absorber 13 is arranged in the cavity. In this way, in a case that an impact or a collision occurs at the bottom of the battery box 1, the light energy absorber 13 and the protection plate 14 can absorb the impact energy produced by the impact or collision, thereby greatly reducing the vibration, extrusion, and collision intensity of the battery module in the battery box 1, and providing buffering and protection for the battery module. In addition, the protection plate 14 is a hollow structure, such that the light energy absorber 13 and the hollow-structured protection plate 14 are light in weight. The battery box 1 provided in this application can provide protection for the battery module without increasing excessive weight.

In conclusion, it should be noted that the foregoing embodiments are for description of the technical solutions of this application only rather than for limiting this application. Although this application has been described in detail with reference to the foregoing embodiments, persons of ordinary skill in the art should appreciate that they can still make modifications to the technical solutions described in the embodiments or make equivalent replacements to some or all technical features thereof.

## Claims

1. A battery box (1), comprising:
a bottom plate (11);
a frame (12), wherein each of two ends of the frame (12) is provided with an opening, the opening at one end of the frame (12) is connected to an edge of the bottom plate (11) to form an accommodating space, and a light-weight energy absorber (13) is arranged on a side of the bottom plate (11) in the accommodating space facing the accommodating space; and
a protection plate (14), wherein the protection plate (14) is arranged in the accommodating space and located on the side of the bottom plate (11) facing the accommodating space; **characterized in that**
the protection plate (14) and the bottom plate (11) are spaced apart to form a cavity;
the light-weight energy absorber (13) is arranged in the cavity;
a battery module is arranged in the accommodating space, and the protection plate (14) is located between the battery module and the bottom plate (11),
wherein
an injection hole (121) communicating with the accommodating space is arranged on a side wall of the frame (12), wherein the injection hole (121) is used for injecting a material forming the light-weight energy absorber (13) into the accommodating space.

2. The battery box (1) according to claim 1, wherein
the protection plate (14) is a hollow structure.

3. The battery box (1) according to claim 1 or 2, wherein
the injection hole (121) is arranged on a side wall of the frame (12) that corresponds to the cavity.

4. The battery box (1) according to any one of claims 1 to 3, wherein the protection plate (14) is provided in multiple layers, and the multiple layers of protection plates (14) are spaced apart or stacked.

5. The battery box (1) according to any one of claims 1 to 4, wherein the protection plate (14) is made of a polypropylene material or a resin material.

6. The battery box (1) according to any one of claims 1 to 5, wherein
the light-weight energy absorber (13) comprises a styrofoam material.

7. The battery box (1) according to any one of claims 1 to 6, wherein the light-weight energy absorber (13) is stacked on the bottom plate (11) of the battery box (1).

8. A battery, comprising the battery box (1) according to any one of claims 1 to 7.

9. An electric device, comprising the battery according to claim 8.

## Patentansprüche

1. Batteriekasten (1), umfassend:
eine Bodenplatte (11);
einen Rahmen (12), wobei an beiden Enden des Rahmens (12) jeweils eine Öffnung vorgesehen ist, die Öffnung an einem Ende des Rahmens (12) mit einer Kante der Bodenplatte (11) verbunden ist, um einen Aufnahmeraum zu bilden, und ein leichtes Energieabsorber-Element (13) auf einer Seite der Bodenplatte (11) im Aufnahmeraum angeordnet ist, wobei diese Seite dem Aufnahmeraum zugewandt ist; und
eine Schutzplatte (14), wobei die Schutzplatte (14) im Aufnahmeraum angeordnet ist und sich auf der Seite der Bodenplatte (11) befindet, die dem Aufnahmeraum zugewandt ist; **dadurch gekennzeichnet, dass**
die Schutzplatte (14) und die Bodenplatte (11) voneinander beabstandet sind, um einen Hohlraum zu bilden;
das leichte Energieabsorber-Element (13) im Hohlraum angeordnet ist;
ein Batteriemodul im Aufnahmeraum angeordnet ist und die Schutzplatte (14) zwischen dem Batteriemodul und der Bodenplatte (11) liegt,
wobei
ein Einspritzloch (121), das mit dem Aufnahmeraum kommuniziert, an einer Seitenwand des Rahmens (12) vorgesehen ist, wobei das Einspritzloch (121) zum Einspritzen eines Materials dient, das das leichte Energieabsorber-Element (13) im Aufnahmeraum bildet.

2. Batteriekasten (1) nach Anspruch 1, wobei
die Schutzplatte (14) eine Hohlstruktur ist.

3. Batteriekasten (1) nach Anspruch 1 oder 2, wobei
das Einspritzloch (121) an einer Seitenwand des Rahmens (12) vorgesehen ist, die dem Hohlraum entspricht.

4. Batteriekasten (1) nach einem der Ansprüche 1 bis 3, wobei die Schutzplatte (14) in mehreren Schichten vorgesehen ist und die mehreren Schichten der Schutzplatten (14) voneinander beabstandet oder gestapelt sind.

5. Batteriekasten (1) nach einem der Ansprüche 1 bis 4, wobei die Schutzplatte (14) aus einem Polypropylenmaterial oder einem Harzmaterial besteht.

6. Batteriekasten (1) nach einem der Ansprüche 1 bis 5, wobei
das leichte Energieabsorber-Element (13) ein Styropormaterial umfasst.

7. Batteriekasten (1) nach einem der Ansprüche 1 bis 6, wobei das leichte Energieabsorber-Element (13) auf der Bodenplatte (11) des Batteriekastens (1) gestapelt ist.

8. Batterie, umfassend den Batteriekasten (1) nach einem der Ansprüche 1 bis 7.

9. Elektrisches Gerät, umfassend die Batterie nach Anspruch 8.

## Revendications

1. Boîte de batterie (1), comprenant :
une plaque inférieure (11) ;
un cadre (12), dans lequel chaque extrémité du cadre (12) est pourvue d'une ouverture,
l'ouverture à une extrémité du cadre (12) étant reliée à un bord de la plaque inférieure (11) pour former un espace de réception, et un absorbeur d'énergie léger (13) étant disposé sur un côté de la plaque inférieure (11) dans l'espace de réception, ce côté étant orienté vers l'espace de réception ; et
une plaque de protection (14), la plaque de protection (14) étant disposée dans l'espace de réception et située sur le côté de la plaque inférieure (11) orienté vers l'espace de réception ;
**caractérisé en ce que**
la plaque de protection (14) et la plaque inférieure (11) sont espacées pour former une cavité ;
l'absorbeur d'énergie léger (13) est disposé dans la cavité ;
un module de batterie est disposé dans l'espace de réception, et la plaque de protection (14) est située entre le module de batterie et la plaque inférieure (11),
dans lequel
un trou d'injection (121) communiquant avec l'espace de réception est disposé sur une paroi latérale du cadre (12), le trou d'injection (121) étant destiné à injecter un matériau formant l'absorbeur d'énergie léger (13) dans l'espace de réception.

2. Boîte de batterie (1) selon la revendication 1, dans laquelle
la plaque de protection (14) est une structure creuse.

3. Boîte de batterie (1) selon la revendication 1 ou 2, dans laquelle
le trou d'injection (121) est disposé sur une paroi latérale du cadre (12) correspondant à la cavité.

4. Boîte de batterie (1) selon l'une des revendications 1 à 3, dans laquelle la plaque de protection (14) est prévue en plusieurs couches, et les plusieurs couches de plaques de protection (14) sont espacées ou empilées.

5. Boîte de batterie (1) selon l'une des revendications 1 à 4, dans laquelle la plaque de protection (14) est fabriquée en matériau polypropylène ou en matériau résineux.

6. Boîte de batterie (1) selon l'une des revendications 1 à 5, dans laquelle
l'absorbeur d'énergie léger (13) comprend un matériau en polystyrène expansé.

7. Boîte de batterie (1) selon l'une des revendications 1 à 6, dans laquelle l'absorbeur d'énergie léger (13) est empilé sur la plaque inférieure (11) de la boîte de batterie (1).

8. Batterie, comprenant la boîte de batterie (1) selon l'une des revendications 1 à 7.

9. Dispositif électrique, comprenant la batterie selon la revendication 8.
